# EUROPEAN PATENT APPLICATION

(11) **EP 4 238 643 A1**
(43) Date of publication of application: **06.09.2023**
(21) Application number: 23159626.3
(22) Date of filing: 02.03.2023
(51) Int. Cl.: B01J 20/16, B01J 20/20

(54) **MANUFACTURING METHOD OF ABSORBER, ABSORBER, AND LITHIUM SECONDARY BATTERY INCLUDING ABSORBER**

(30) Priority: 04.03.2022 KR 20220028303
(71) Applicant: SK On Co., Ltd., Seoul 03161 (KR)
(72) Inventor: CHO, Eun Soo, 34124 Daejeon (KR); KIM, Sung Yeop, 34124 Daejeon (KR); NA, Ji Won, 34124 Daejeon (KR); PARK, Gyu Rim, 34124 Daejeon (KR)
(74) Representative: Bird & Bird LLP

(57) **Abstract**

Provided is a manufacturing method of an absorber, including mixing a base adsorbent material and a base resin material to produce an adsorbent composite having a form of a master batch; and producing an absorber in a film shape using the adsorbent composite.

## Description

### BACKGROUND OF THE INVENTION

### 1. Field of the Invention

The present disclosure relates to a manufacturing method of an absorber, an absorber, and a lithium secondary battery comprising the absorber, and more specifically, a manufacturing method of an absorber which is manufactured by mixing an absorbent material and a resin material, an absorber, and a lithium secondary battery comprising the absorber.

### 2. Description of Related Art

With the development of electronics, communications, and space industries, the demand for lithium secondary batteries as an energy power source is rapidly increasing. In particular, as importance of global eco-friendly policies is emphasized, the electric vehicle market is growing by leaps and bounds, and research and development on lithium secondary batteries are actively carried out at home and abroad.

The lithium secondary battery comprises a cathode, an anode, and a separator interposed therebetween, and active materials that lithium ions may be inserted and extracted are provided in the cathode and the anode, respectively.

During operation of the lithium secondary battery, gas (e.g., carbon dioxide) may be generated due to an electrochemical reaction. Accordingly, the lithium secondary battery may further comprise an absorber for absorbing the generated gas. Here, the absorber should have adsorption performance sufficient to secure stability in the lithium secondary battery as well as process performance suitable for the manufacturing procedure.

### SUMMARY OF THE INVENTION

Embodiments provide a manufacturing method of an absorber which may be easily inserted to the inside of a lithium secondary battery and can provide enhanced efficiency in the manufacturing process, an absorber, and a lithium secondary battery comprising the absorber.

In accordance with an aspect of the present disclosure, there is provided a method of manufacturing an absorber, comprising mixing a base adsorbent material and a base resin material to produce an adsorbent composite having a form of a master batch; and producing an absorber in a film shape using the adsorbent composite.

In accordance with an embodiment, there is provided the manufacturing method of the absorber, wherein the producing of the absorber having the film shape may comprise performing a film casting process using the adsorbent composite.

In accordance with an embodiment, there is provided the manufacturing method of the absorber, wherein the adsorbent composite may comprise an adsorbent material based on the base adsorbent material and a resin material based on the base resin material, and the adsorbent material and the resin material may be mixed on a molecular scale.

In accordance with an embodiment, there is provided the manufacturing method of the absorber, wherein the base adsorbent material may comprise a material capable of absorbing carbon dioxide.

In accordance with an embodiment, there is provided the manufacturing method of the absorber, wherein the base adsorbent material may be in a powder form.

In accordance with an embodiment, there is provided the manufacturing method of the absorber, wherein a particle diameter of the base adsorbent material may be 0.1 µm to 10 µm.

In accordance with an embodiment, there is provided the manufacturing method of the absorber, wherein the producing of the adsorbent composite may comprise performing a melt blending process on the base adsorbent material and the base resin material.

In accordance with an embodiment, there is provided the manufacturing method of the absorber, wherein, in the producing of the adsorbent composite, a weight of the base adsorbent material may be 5 wt% to 50 wt%. on a basis of total weight of the base adsorbent material and the base resin material

In accordance with an embodiment, there is provided the manufacturing method of the absorber, wherein, in the producing of the adsorbent composite, a weight of the base adsorbent material may be 20 wt% to 30 wt% on a basis of total weight of the base adsorbent material and the base resin material.

In accordance with an embodiment, there is provided the manufacturing method of the absorber further comprising removing moisture of the absorber.

In accordance with an embodiment, there is provided the manufacturing method of the absorber, wherein the removing of moisture further may comprise performing a vacuum drying process on the absorber.

In accordance with an embodiment, there is provided the manufacturing method of the absorber, wherein the base adsorbent material may comprise at least one of zeolite-based material, carbon-based material, alumina, or silica.

In accordance with an embodiment, there is provided the manufacturing method of the absorber, wherein the base resin material may comprise at least one of polypropylene resin, acrylate-based resin, epoxy resin, phenolic resin, polyamide-based resin, polyimide-based resin, polyester-based resin, or polyphenylenesulfide-based resin.

In accordance with another aspect of the present disclosure, there is provided an absorber which comprises, as an absorber having a film shape, an adsorbent composite comprising an adsorbent material capable of adsorbing gas and a resin material, wherein the adsorbent material and the resin material are mixed on a molecular scale, and the absorber is produced using a composite having a master batch form of a base adsorbent material and a base resin material.

In accordance with another aspect of the present disclosure, there is provided a lithium secondary battery, comprising the absorber; a cathode comprising a cathode active material; an anode comprising an anode active material; and a separator interposed between the cathode and the anode.

In accordance with an embodiment of the present disclosure, it is possible to provide a manufacturing method of an absorber which may be easily inserted to the inside of a lithium secondary battery and ensures enhanced efficiency in the manufacturing process, an absorber, and a lithium secondary battery comprising the absorber.

### BRIEF DESCRIPTION OF THE DRAWINGS

FIG. 1 is a cross-sectional view schematically illustrating a lithium secondary battery in accordance with an embodiment.
FIG. 2 is a perspective view schematically illustrating a lithium secondary battery in accordance with an embodiment.
FIG. 3 is a flowchart schematically illustrating a manufacturing method of an absorber in accordance with an embodiment.
FIG. 4 is a photomicrograph of a base adsorbent material in accordance with an embodiment.
FIG. 5 is a photograph of a base resin material in accordance with an embodiment.
FIG. 6 is a photograph of an adsorbent composite produced according to a manufacturing method of an absorber in accordance with an embodiment.
FIG. 7 is a photograph of an absorber produced according to a manufacturing method of an absorber in accordance with an embodiment.

### DESCRIPTION OF THE INVENTION

The present disclosure relates to a manufacturing method of an absorber, an absorber, and a lithium secondary battery comprising the absorber, and more specifically, a manufacturing method of an absorber manufactured by mixing an absorbent material and a resin material, an absorber, and a lithium secondary battery comprising the absorber.

Hereinafter, with reference to the accompanying drawings, the manufacturing method of an absorber, the absorber, and the lithium secondary battery comprising the absorber in accordance with an embodiment will be described.

### 1. Definition

As used herein, the term "~ are mixed on a molecular scale" refers to a degree of mixing between a first material and a second material. For example, when the first material and the second material are mixed with each other on a molecular scale, first molecules constituting the first material and second molecules constituting the second material may be adjacent to each other. In this case, the first molecules, the second molecules, and the first molecules may be disposed alternately, or the second molecules, the first molecules, and the second molecules may be disposed alternately.

Herein, a particle diameter is a parameter indicating a size of particles. For example, the particle diameter of a particle having a circular shape may refer to a diameter, and that of a particle having an elliptical shape may refer to a long radius.

Herein, the term "adsorbent composite having a form of a master batch" refers to an adsorbent composite, wherein the base adsorbent material and the base resin material are mixed, preferably by performing a melt blending process, which preferably results in a blend of the base adsorbent material and the base resin material. The "master batch" may refer to a composite which comprises or consists of a polymer (here: base resin material) and a desired additive (here: base adsorbent material). Typically, master batches are produced and used in the form of granulates which, in turn, can be used together with further resin material in the production of polymer composites and corresponding polymer articles (here: absorber). For that purpose, the concentration of the desired additive (here: base adsorbent material) in a master batch should be higher than in the final polymer composite or article (here: absorber). Master batches can allow for a more precise dosage and even distribution of additives in the final polymer composite compared to direct addition e.g., through the feed hopper or a side feeder.

### 2. Lithium secondary battery

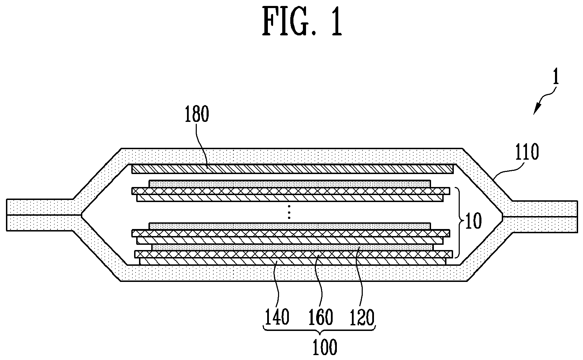

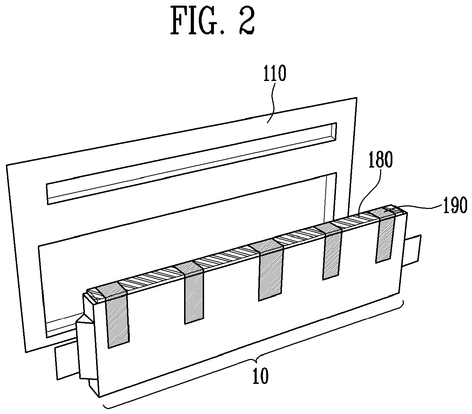

FIG. 1 is a cross-sectional view schematically illustrating a lithium secondary battery in accordance with an embodiment. FIG. 2 is a perspective view schematically illustrating the lithium secondary battery in accordance with an embodiment.

Referring to FIGS. 1 and 2, a lithium secondary battery 1 may comprise an exterior member 110, a cathode 120, an anode 140, a separator 160, and an absorber 180.

The exterior member 110 is provided to surround internal components of the lithium secondary battery 1 to protect the internal components from external surroundings. The exterior member 110 may be of one of, for example, a pouch type, a can type, and an angular type, and is not limited to a specific example.

The cathode 120 and the anode 140 may comprise a current collector and an active material layer disposed on the current collector, respectively. For example, the cathode 120 may comprise a cathode current collector and a cathode active material layer, and the anode 140 may comprise an anode current collector and an anode active material layer.

The current collector may comprise a known conductive material in a range that does not cause a chemical reaction in the lithium secondary battery 1. For example, the current collector may comprise at least one of stainless steel, nickel (Ni), aluminum (Al), titanium (Ti), copper (Cu), or alloys thereof, and may be provided in various forms such as, for example, a film, sheet, or foil.

The active material layer comprises an active material. For example, the cathode active material layer may comprise a cathode active material, and the anode active material layer may comprise an anode active material.

The cathode active material may comprise a material that lithium (Li) ions may be inserted and extracted. The cathode active material may comprise lithium metal oxide. For example, the cathode active material may comprise at least one of lithium manganese-based oxide(s), lithium nickel-based oxide(s), lithium cobalt-based oxide(s), lithium nickel manganese-based oxide(s), lithium nickel cobalt aluminum-based oxide(s), lithium iron phosphate-based compound(s), lithium phosphate manganese-based compound(s), lithium phosphate cobalt-based compound(s), and lithium phosphate vanadium-based compound(s), but is not necessarily limited to specific examples.

The anode active material may comprise a material that lithium ions may be adsorbed and extracted. For example, the anode active material may comprise at least one of carbon-based material(s), such as for example crystalline carbon, amorphous carbon, carbon composites, or carbon fibers; lithium alloy; silicon (Si); or tin (Sn). In accordance with an embodiment, the anode active material may be natural graphite or artificial graphite, but is not limited to a specific example.

The cathode 120 and the anode 140 may further comprise a binder and a conductive material, respectively.

The binder may be configured to mediate the bonding between the current collector and the active material layer, thereby improving mechanical stability. In accordance with an embodiment, the binder may be an organic binder and/or a water-based binder, and may be used with a thickener such as carboxymethyl cellulose (CMC). In accordance with an embodiment, the organic binder may comprise at least one of vinylidene fluoride-hexafluoropropylene copolymer (PVDF-co-HFP), polyvinylidene fluoride (PVDF), polyacrylonitrile, or polymethylmethacrylate, and the water-based binder may comprise styrenebutadiene rubber (SBR), but are not necessarily limited thereto.

The conductive material may improve the electrical conductivity of the lithium secondary battery 1. In accordance with an embodiment, the conductive material may comprise a conventional carbon-based conductive material. For example, the conductive material may comprise at least one of graphite, carbon black, graphene, or carbon nanotubes. However, it is not limited thereto, and the conductive material may comprise a metal-based conductive material.

The separator 160 may be disposed between the cathode 120 and the anode 140. The separator 160 is configured to prevent an electrical short circuit between the cathode 120 and the anode 140 and generate the flow of ions.

In accordance with an embodiment, the separator 160 may comprise a porous polymer film and/or a porous nonwoven fabric. The porous polymer film may be formed in a single layer or multiple layers. The porous polymer film may comprise polyolefin-based polymers such as, for example, ethylene polymers, propylene polymers, ethylene/butene copolymers, ethylene/hexene copolymers, and/or ethylene/methacrylate copolymers. The porous nonwoven fabric may comprise glass fibers with a high melting point and polyethylene terephthalate fibers. However, it is not limited thereto, and the separator may be a ceramic-containing high heat resistant separator (CCS; Ceramic Coated Separator) in accordance with an embodiment.

In accordance with an embodiment, an electrode cell 100 comprising the cathode 120, the anode 140, and the separator 160 may be provided. A plurality of electrode cells 100 may be provided to be sequentially stacked in the exterior member 110.

The absorber 180 is configured to absorb and/or adsorb gas. The absorber 180 may comprise an adsorbent material capable of absorbing and/or adsorbing gases.

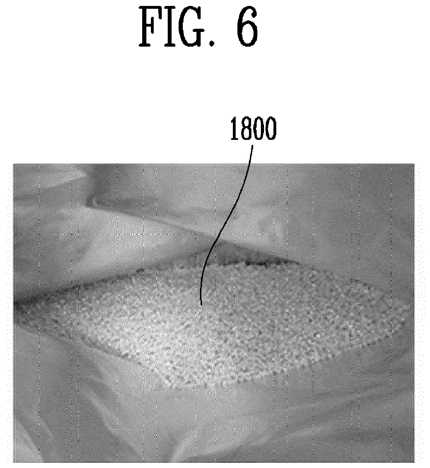

The absorber 180 may comprise a master batch type material. The absorber 180 may comprise an adsorbent composite (see '1800' in FIG. 6), for example a master batch type composite. In other examples, the absorber 180 may be a complex of a plurality of adsorbent composites 1800.

The adsorbent composite 1800 may comprise an adsorbent material and a resin material. In accordance with an embodiment, the adsorbent composite 1800 may have a form in which the adsorbent material is dispersed in the resin material, or the resin material may have a form in which the resin material is dispersed in the adsorbent material. However, it is not necessarily limited to the aforementioned form. For example, the adsorbent material and the resin material may be substantially uniformly mixed with each other.

In accordance with an embodiment, in the adsorbent composite 1800, the adsorbent material and the resin material may be mixed on a molecular scale. In the adsorbent composite 1800, each of the adsorbent material and the resin material may be uniformly distributed by each position of the adsorbent composite 1800. For example, distribution of the adsorbent material and the resin material at a first position of the absorber 180 may be substantially the same as that of the adsorbent material and the resin material at a second position that is different from the first position of the absorber 180.

In the adsorbent composite 1800, the adsorbent material and the resin material may satisfy a predetermined content ratio. For example, the weight of the adsorbent material may be 5 wt% to 50 wt%, or 5 wt% to 30 wt%, or 20 wt% to 30 wt%, of the total weight of the adsorbent composite 1800.

Experimentally, when the weight percentage of the adsorbent material exceeds 50 wt%, it may be difficult to provide the adsorbent composite 1800 in the film shape. On the contrary, when the weight percentage of the adsorbent material is less than 20 wt%, the adsorption performance of the produced absorber 180 may not be sufficiently secured. However, in accordance with an embodiment, the adsorbent material and the resin material may be mixed in the adsorbent composite 1800 at an optimal weight percentage to ensure sufficient adsorption performance while being suitable for the filming process.

The adsorbent materials comprise a material capable of absorbing and/or adsorbing gas. The adsorbent material is an adsorbent component of the adsorbent composite 1800 and configured to absorb and/or adsorb gas. The adsorbent material may comprise a material capable of absorbing and/or adsorbing carbon dioxide. In accordance with an embodiment, the adsorbent material may comprise a porous material. For example, the adsorbent material may comprise a zeolite-based material (e.g., Y-type, X-type, A-type, ZSM type, etc.) or a carbon-based material (e.g., activated carbon, etc.). However, it is not limited to the examples described above. For example, the adsorbent material may comprise alumina and silica, and/or may comprise any one of other known materials capable of absorbing carbon dioxide.

The resin material may improve physical properties of the absorber 180. For example, the resin material may improve physical properties to make the absorber 180 smoothly perform the filming process. The resin material may comprise resin. For example, the resin material may comprise at least one of polypropylene resin, acrylate-based resin, epoxy resin, phenolic resin, polyamide-based resin, polyimide-based resin, polyester-based resin, or polyphenylenesulfide-based resin, but is not necessarily limited to a particular resin.

The absorber 180 may be disposed in the exterior member 110. For example, it may be disposed between an electrode assembly 10 comprising a plurality of electrode cells 100 and the exterior member 110.

For example, the absorber 180 may overlap with the electrode assembly 10 along a stacking direction of the electrode cells 100. Alternatively, in accordance with an embodiment, the absorber 180 may be disposed between electrode cells 100 that are adjacent to each other.

In accordance with an embodiment, referring to FIG. 2, the absorber 180 may be disposed on one surface of the electrode assembly 10 and coupled to the electrode assembly 10 by an adhesive member 190. Accordingly, the absorber 180 may be firmly provided inside the exterior member 110. In accordance with an embodiment, when a plurality of electrode assemblies 10 are provided, the absorbers 180 may be attached to each of the electrode assemblies 10 to further improve adsorption performance. In accordance with an embodiment, various materials having adhesive properties may be applied to the adhesive member 190.

The absorber 180 may have a film shape. By having the film shape, at least one surface of the absorber 180 may be exposed. In this case, the absorber 180 may have a large surface area and more efficiently absorb gas generated in the lithium secondary battery 1. Moreover, by having the film shape, the absorber 180 may be easily provided in the exterior member 110, thereby improving process convenience. In addition, in accordance with an embodiment, since the adsorbent material and the resin material in the adsorbent composite 1800 satisfy a predetermined weight ratio, process performance in the filming process is enhanced while the adsorption performance for gas generated in the lithium secondary battery 1 is sufficiently secured.

Meanwhile, in accordance with an embodiment, the electrode cell 100 comprising the cathode 120, the anode 140, the separator 160, and the absorber 180 may be provided. A plurality of electrode cells 100 may be provided to be wound, laminated, or folded, and thus the electrode assembly 10 may be provided.

The electrode assembly 10 may be provided with an electrolyte, such that the lithium secondary battery 1 in accordance with an embodiment may be provided. In accordance with an embodiment, the lithium secondary battery 10 may be any one of a cylindrical type using a can, prismatic type, pouch type, or coin type, but is not limited thereto.

The electrolyte may be a non-aqueous electrolyte. The electrolyte may comprise lithium salts and organic solvents.

In accordance with an embodiment, the organic solvent may comprise at least one of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, or tetrahydrofuran.

### 3. Manufacturing method of the absorber

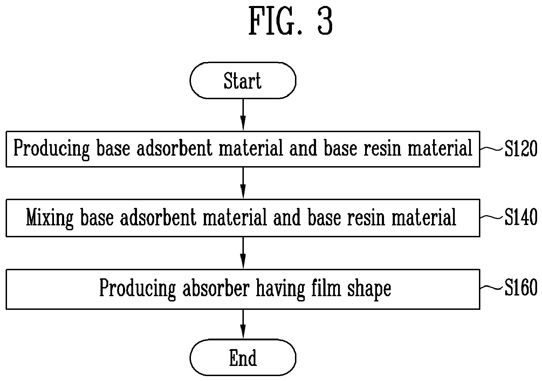

Hereinafter, referring to FIGS. 3 to 7, a manufacturing method of the absorber 180 in accordance with an embodiment will be described.

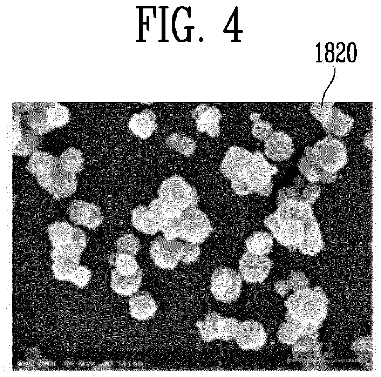

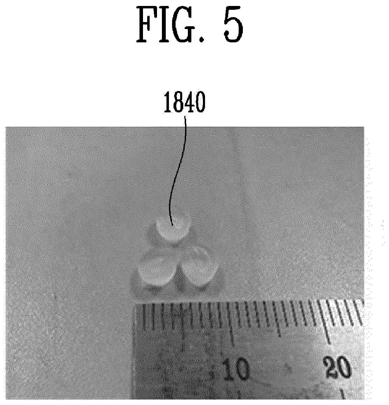

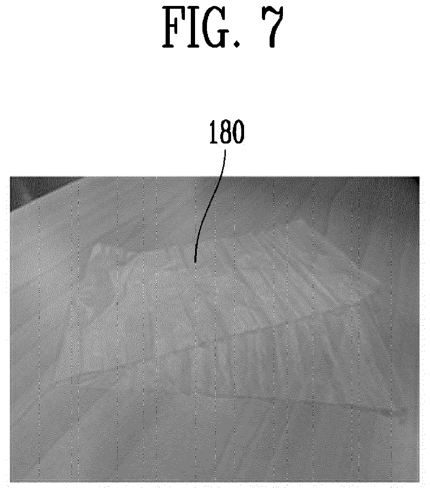

FIG. 3 is a flowchart schematically illustrating the manufacturing method of the absorber in accordance with an embodiment. FIG. 4 is a photomicrograph a base adsorbent material in accordance with an embodiment. FIG. 5 is a photograph of a base resin material in accordance with an embodiment. FIG. 6 is a photograph of an adsorbent composite produced according to the manufacturing method of the absorber in accordance with an embodiment. FIG. 7 is a photograph of the absorber produced according to the manufacturing method of the absorber in accordance with an embodiment.

Referring to FIG. 3, the manufacturing method of the absorber 180 comprises producing a base adsorbent material 1820 and a base resin material 1840 (S120), mixing the base adsorbent material 1820 and the base resin material 1840 (S140), and producing the absorber having a film shape (S160).

In the producing of the base adsorbent material 1820 and the base resin material 1840 (S 120), it is possible to provide the base adsorbent material 1820 and the base resin material 1840.

The base adsorbent material 1820 may comprise a material capable of adsorbing and/or absorbing gas and refer to an adsorbent material before being mixed with the base resin. The base adsorbent material 1820 may be for providing the adsorbent material. In accordance with an embodiment, the base adsorbent material 1820 may comprise any one of the above-described materials with reference to the adsorbent material. In accordance with an embodiment, the base adsorbent material 1820 may be provided in a powder form. When provided in the powder form, the particle diameter of the base adsorbent material 1820 may be 0.1 µm to 10 µm. However, it is not necessarily limited to the numerical range described above, and in accordance with an embodiment, the particle diameter of the base adsorbent material 1820 may be 3 µm to 5 µm. Here, a value of the particle diameter of the base adsorbent material 1820 may refer to an average size of a plurality of particles comprised in the base adsorbent material 1820. For example, "particle diameter" may mean a largest diameter defined in a target object. "Particle diameter" may be determined by electron microscopy or the like, but the present disclosure is not limited thereto. In accordance with an embodiment, a photomicrograph of a Y-type zeolite-based material, an example of the base adsorbent material 1820, is shown in FIG. 4.

The base resin material 1840 may comprise a resin and refer to a resin before being mixed with the base adsorbent material 1820. The base resin material 1840 may be for providing a resin material. In accordance with an embodiment, the base resin material 1840 may comprise any one of the materials described above with reference to the resin material. In accordance with an embodiment, a photograph of polypropylene resin, an example of the base resin material 1840, is shown in FIG. 5.

In accordance with an embodiment, a diameter of the base adsorbent material 1820 and that of the base resin material 1840 may be different from each other.

In the mixing of the base adsorbent material 1820 and the base resin material 1840 S 140, by mixing the base adsorbent material 1820 and the base resin material 1840 may be mixed to provide the adsorbent composite 1800 that is provided as a master batch. The adsorbent composite 1800 having a form of a master batch may be provided. In accordance with an embodiment, a photograph of a mast batch including a Y-type zeolite-based material and polypropylene resin, an example of the adsorbent composite 1800, is shown in FIG. 6.

In this operation, a melt blending process may be performed on the base adsorbent material 1820 and the base resin material 1840. The base adsorbent material 1820 and the base resin material 1840 may be mixed with each other as the melt blending process proceeds to be provided as the adsorbent composite 1800. The melt blending process may be performed by various known melt blending apparatuses, and the melt bending apparatuses are not limited to a particular example.

In this operation, the weight percentages in which the base adsorbent material 1820 and the base resin material 1840 are mixed may satisfy a predetermined numerical range. For example, the weight percentage of the base adsorbent material 1820 may be 5 wt% to 50 wt%, or 5 wt% to 30 wt%, or 5 wt% to 30 wt%, on a basis of total weight of the base adsorbent material 1820 and the base resin material 1840.

The temperature at which the melt blending process is performed may be appropriately selected in a temperature range in which the base adsorbent material 1820 and the base resin material 1840 are not thermally damaged in the known temperature range for the melt blending process.

In this operation, the base adsorbent material 1820 and the base resin material 1840 may be mixed with each other on the molecular scale.

In accordance with an embodiment, prior to being provided in the film shape, a process in which the base adsorbent material 1820 and the base resin material 1840 are mixed may be preceded. Accordingly, the relative weight percentages of the adsorbent material and the resin material in the absorber 180 may be easily controlled according to the intention of a process user. In addition, even when the particle diameter of each of the base adsorbent material 1820 and the base resin material 1840 is different from each other, the base adsorbent material 1820 and the base resin material 1840 are uniformly mixed, such that the adsorbent material and the resin material are uniformly distributed throughout the absorber 180.

In the producing of the absorber having the film shape S 160, the provided adsorbent composite 1800 may be filmed.

In the operation, the adsorbent composites 1800 may be filmed to provide the absorber 180 having the film shape. A known filming method may be used for the filming process. For example, for the filming process, a film casting method, a calendering method, or a melt filming method may be used. Preferably, the film casting process may be performed on the adsorbent composites 1800 to provide the absorber 180 having the film shape. In accordance with an embodiment, the absorber 180 having the film shape is shown in FIG. 7.

In accordance with an embodiment, a thickness of the provided absorber 180 may be less than or equal to 50 µm, or less than or equal to 30 µm. In order to adjust the thickness of the absorber 180, during the filming process, the absorber 180 may be stretched in a machine direction (MD) indicating a direction that the process is progressed. In other words, experimentally, external force in the machine direction may be applied in the absorber 180 during the stretching process, and there may be a risk that the film shape may be damaged due to the orientation of the adsorbent composite 1800. For example, in the process of adjusting the thickness of the absorber 180, longitudinal tearing or curl may occur.

However, since the adsorbent composite 1800 for producing the absorber 180 is provided as a master batch, physical damage in the process of filming the absorber 180 may be avoided, thereby improving processability.

The film casting process may be performed within a predetermined temperature range. For example, the predetermined temperature range may be 200°C to 240°C, but is not necessarily limited thereto. For example, it may be appropriately selected in a temperature range in which the adsorbent composite is not damaged by heat.

In accordance with a subsequent embodiment, a vacuum drying process may be performed to remove moisture present in the absorber 180 having the film shape. The vacuum drying process may be performed, for example, for 1 hour in a temperature range from 80°C to 120°C. However, the present disclosure is not necessarily limited to the foregoing.

## Claims

1. A method of manufacturing an absorber, the method comprising:
mixing a base adsorbent material (1820) and a base resin material (1840) to produce an adsorbent composite (1800) having a form of a master batch; and
producing an absorber (180) in a film shape using the adsorbent composite.

2. The method of claim 1, wherein the producing of the absorber (180) having the film shape comprises performing a film casting process using the adsorbent composite (1800).

3. The method of claims 1 or 2, wherein the adsorbent composite (1800) comprises an adsorbent material based on the base adsorbent material (1820) and a resin material based on the base resin material (1840), and
the adsorbent material and the resin material are mixed on a molecular scale.

4. The method of any one of claims 1 to 3, wherein the base adsorbent material (1820) comprises a material capable of absorbing and/or adsorbing carbon dioxide.

5. The method of any one of claims 1 to 4, wherein the base adsorbent material (1820) is in a powder form.

6. The method of any one of claims 1 to 5, wherein a particle diameter of the base adsorbent material (1820) is 0.1 µm to 10 µm.

7. The method of any one of claims 1 to 6, wherein the producing of the adsorbent composite (1800) comprises performing a melt blending process on the base adsorbent material (1820) and the base resin material (1840).

8. The method of any one of claims 1 to 7, wherein, in the producing of the adsorbent composite (1800), the weight of the base adsorbent material (1820) is 5 wt% to 50 wt% on a basis of total weight of the base adsorbent material (1820) and the base resin material (1840).

9. The method of any one of claims 1 to 8, wherein, in the producing of the adsorbent composite (1800), the weight of the base adsorbent material (1820) is 20 wt% to 30 wt% on a basis of total weight of the base adsorbent material (1820) and the base resin material (1840).

10. The method of any one of claims 1 to 9, further comprising removing moisture of the absorber (180).

11. The method of claim 10, wherein the removing of moisture further comprises performing a vacuum drying process on the absorber (180).

12. The method of any one of claims 1 to 11, wherein the base adsorbent material (1820) comprises at least one of zeolite-based material, carbon-based material, alumina, or silica.

13. The method of any one of claims 1 to 12, wherein the base resin material (1840) comprises at least one of polypropylene resin, acrylate-based resin, epoxy resin, phenolic resin, polyamide-based resin, polyimide-based resin, polyester-based resin, or polyphenylenesulfide-based resin.

14. An absorber (180) having a film shape, the absorber (180) comprising:
an adsorbent composite (1800) comprising an adsorbent material capable of adsorbing gas and a resin material,
wherein the adsorbent material and the resin material are mixed on a molecular scale, and
the absorber (180) is produced using a composite having a master batch form of a base adsorbent material (1820) and a base resin material (1840).

15. A lithium secondary battery comprising:
the absorber (180) according to claim 14;
a cathode (120) comprising a cathode active material;
an anode (140) comprising an anode active material; and
a separator (160) interposed between the cathode (120) and the anode (140).
